# EUROPÄISCHE PATENTSCHRIFT

(11) **EP 1 166 413 B1**
(45) Veröffentlichungstag und Bekanntmachung des Hinweises auf die Patenterteilung: **21.05.2003**
(21) Anmeldenummer: 00925061.4
(22) Anmeldetag: 30.03.2000
(51) Int. Cl.: H02B 1/20

(54) **SCHALTGERÄTEGRUPPE MIT ISOLIERGEKAPSELTEM SAMMELSCHIENENSYSTEM**
SWITCHGEAR GROUP COMPRISING A BUSBAR SYSTEM WITH INSULATING ENCAPSULATION
GROUPE D'APPAREILS DE COMMUTATION COMPORTANT UN SYSTEME DE BARRES DE DISTRIBUTION POURVU D'UN ENCAPSULAGE D'ISOLATION

(30) Priorität: 12.04.1999 DE 19916320
(43) Veröffentlichungstag der Anmeldung: 02.01.2002
(73) Patentinhaber: SIEMENS AKTIENGESELLSCHAFT, 80333 München (DE)
(72) Erfinder: HELDMANN, Berthold, D-92272 Freudenberg (DE)
(86) Internationale Anmeldenummer: DE0000972
(87) Internationale Veröffentlichungsnummer: WO00062386

(56) Entgegenhaltungen:
- EP-A- 0 109 881
- EP-A- 0 466 043
- DE-A- 1 930 515
- FR-A- 2 397 083
- GB-A- 2 034 984

## Beschreibung

Die Erfindung bezieht sich auf eine Schaltgerätegruppe aus mehreren nebeneinander angeordneten Schaltgeräten, an die ein isoliergekapseltes, zur elektrischen Versorgung der Schaltgeräte dienendes Sammelschienensystem angeschlossen ist, das mehrere Stromschienen mit jeweils über die stromschienenlänge verteilten Anschlußkontakten aufweist, die als flexible Leitungen ausgeführt sind und die mit Anschlüssen der Schaltgeräte elektrisch verbunden sind, wobei die Stromschienen in einem geschlossenen isoliergekapseltem Gehäuse angeordnet sind.

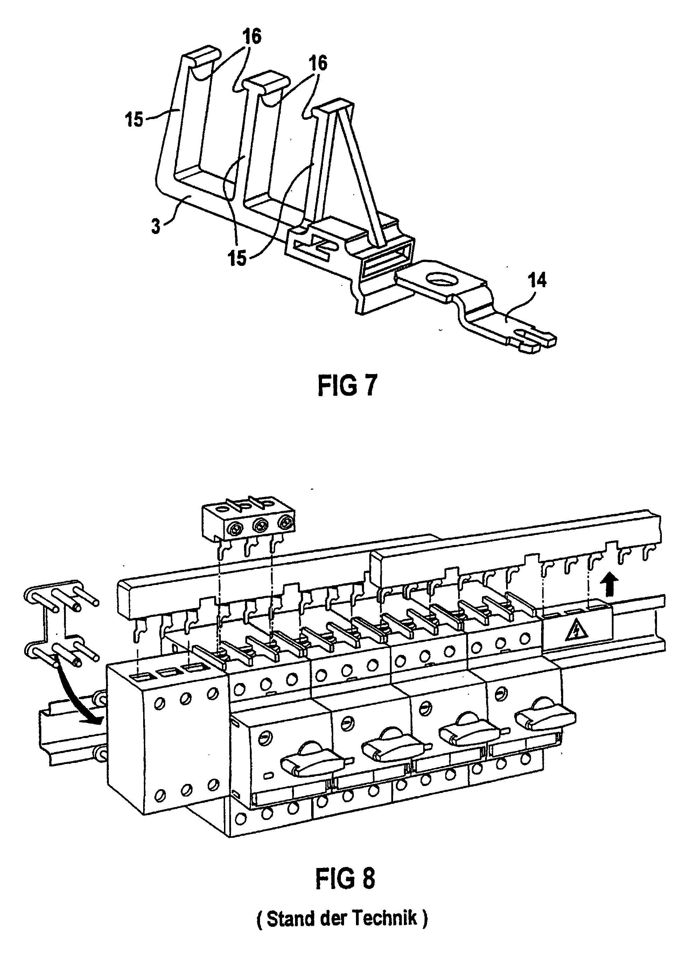

Eine gattungsgemäße Schaltgerätegruppe mit isoliergekapseltem Sammelschienensystem, wie sie seit längerem von Schaltgeräteherstellern geliefert wird, ist in FIG 8 dargestellt. Das Sammelschienensystem besteht hier zum Drehstromanschluß aus drei Stromschienen identischer Ausführung mit starren Anschlußkontakten, die in einem Isoliergehäuse angeordnet sind. Die hier nebeneinander angeordneten Schaltgeräte weisen Schraubanschlußkontakte auf, die zum Anschluß des Sammelschienensystems geöffnet sein müssen. Bei dicht nebeneinander angeordneten Schaltgeräten gleicher Bauart und Baugröße sind die Anschlußöffnungen auf einer Linie und in einer Ebene angeordnet, so daß bei Auslegung der Anschlußkontakte des Sammelschienensystems in entsprechenden Abständen ein einfacher Anschluß möglich ist. Die genannten Voraussetzungen sind jedoch in vielen Fällen nicht erfüllt. Bei Geräteanordnungen mit Schaltgeräten ungleicher Bauart und Baugröße sind die Anschlußöffnungen der Schaltgeräte in der Höhe und/oder. Tiefe versetzt. Außerdem können die Geräteabstände durch seitlich angebautes Zubehör, z.B. einen Hilfsschalter, variieren. In diesen Fällen ist das Einspeisen mit den bekannten Dreiphasen-Sammelschienensystemen nicht mehr möglich.

Außerdem ist es bei den bekannten Sammelschienensystemen erforderlich, daß zum Auswechseln eines angeschlossenen Schaltgeräts, die dieses verbindende Sammelschiene demontiert werden muß, bevor das Schaltgerät selbst demontiert werden kann.

Bei Schaltgeräten mit Käfigzugfeder-Anschlußtechnik sind die bekannten Dreiphasen-Sammelschienensysteme mit starren Anschlußkontakten nicht einsetzbar, da die Käfigzugfeder-Anschlüsse funktionsbedingt nicht geöffnet sind. Das gleichzeitige Öffnen der Käfigzugfeder-Anschlüsse mehrerer Geräte ist aufgrund des großen Kraftaufwandes praktisch nur mit unvertretbarem Aufwand möglich, so daß zum Anschluß von Schaltgeräten mit Käfigzugfeder-Anschlußtechnik keine praktisch brauchbare Lösung zur Verfügung steht. Bisher mußten diese Geräte im Schaltschrank mit Hilfe einzelner Leitungen vom Hauptsammelschienensystem gespeist werden, was mit entsprechendem Aufwand bei der Montage verwunden war.

Der Erfindung liegt die Aufgabe zugrunde, eine Schaltgerätegruppe mit isoliergekapseltem Sammelschienensystem der obengenannten Art dahingehend zu verbessern, daß auch Schaltgeräte ungleicher Bauart und Baugröße bei unterschiedlichen Geräteabständen sowie Schaltgeräte mit Käfigzugfeder-Anschlußtechnik auf einfache Weise anschließbar sind.

Die GB 2 034 984 A offenbart ein Sammelschienensystem zum Anschließen von Installationseinbaugeräten an eine oder mehrere Stromschienen, die von einem an einer Seite offenen Isolierstoff umgeben sind. Das Sammelschienensystem ist demzufolge nicht isoliergekapselt, da die Steckverbindungen zu den Stromschienen nicht berührungssicher abgedeckt sind. Über die Stromschienenlänge sind Anschlusskontakte verteilt, die mit Anschlüssen von Schaltgeräten elektrisch verbunden sind. Die Anschlusskontakte sind hier als flexible Leitungen ausgeführt. Die Stromschiene samt Isolierprofilen sind auf Seitenschienen befestigt, die ihrerseits mittels in einem Schlitz geführter Schrauben auf einer Hutprofilschiene verschiebbar befestigt sind.

Die gestellte Aufgabe wird mit den Merkmalen nach Anspruch 1 gelöst.

Aufgrund der erfindungsgemäßen Ausführung ist es möglich. Käfigzugfedern einzeln anzuschließen und das oben beschriebene Kraftproblem damit zu umgehen. Diese Lösung erlaubt außerdem, daß die Anschlußöffnungen der Schaltgeräte in der Höhe und/oder Tiefe versetzt sein können und daß die Geräteabstände variieren. Durch Ausführung der flexiblen Leitungen in entsprechender Länge ist eine Anpassung an die jeweils vorliegende Problemstellung möglich.

Zum Auswechseln eines angeschlossenen Schaltgerätes müssen nur die angeschlossenen flexiblen Leitungen abgeklemmt werden.

Durch die Lösung nach Anspruch 1 wird mit dem Sammelschienensystem außerdem eine Baugruppe gebildet, die autark eingesetzt werden kann und nur noch eine einzige Zuleitung vom Hauptsammelschienensystem benötigt.

Vorteilhafte Weiterbildungen der Erfindung sind den Unteransprüchen 2 bis 6 zu entnehmen.

Eine besonders vorteilhafte Ausführungsform ist gegeben, wenn das Sammelschienensystem von den Halteklammern teilweise formschlüssig umgriffen ist und dabei in Längsrichtung der Stromschienen verschieblich gehalten ist. Hierdurch können auf einfache Weise unterschiedliche Gerätebreiten ausgeglichen werden.

Im Hinblick auf die Montage ist es vorteilhaft, wenn die Halteklammern am Gehäuse der Schaltgeräte einschnappbar sind.

Eine weitere vorteilhafte Ausführung besteht, wenn die elektrische Verbindung zwischen Stromschiene und flexibler Leitung als Flachsteckverbindung ausgeführt ist, da dies die Anwendung von Leitern unterschiedlicher Leiterquerschnitte ermöglicht.

Außerdem weist das Gehäuse des Sammelschienensystems für die flexiblen Leitungen Leitungsdurchführungen auf, die als elastische Dichtlippe ausgeführt sind, um ebenfalls die Ausführung mit unterschiedlichen Leiterquerschnitten zu ermöglichen.

Ein Ausführungsbeispiel der Erfindung wird im folgenden anhand einer Zeichnung näher erläutert. Es zeigen:
- FIG 1: eine erfindungsgemäße Schaltgerätegruppe mit zugehörigem nicht angeschlossenen Sammelschienensystem,
- FIG 2: die Schaltgerätegruppe gemäß FIG 1 im angeschlossenen Zustand,
- FIG 3: die einzelnen Stromschienen des Sammelschienensystems gemäß FIG 1 und 2,
- FIG 4: eine perspektivische Ansicht des Sammelschienensystems gemäß FIG 1 und 2,
- FIG 5: eine Querschnittsansicht des Sammelschienensystems gemäß FIG 4,
- FIG 6: eine Flachsteckverbindung eines flexiblen Leiters des Sammelschienensystems und
- FIG 7.: eine Halteklammer gemäß FIG 1 und 2 zur Halterung des Sammelschienensystems.

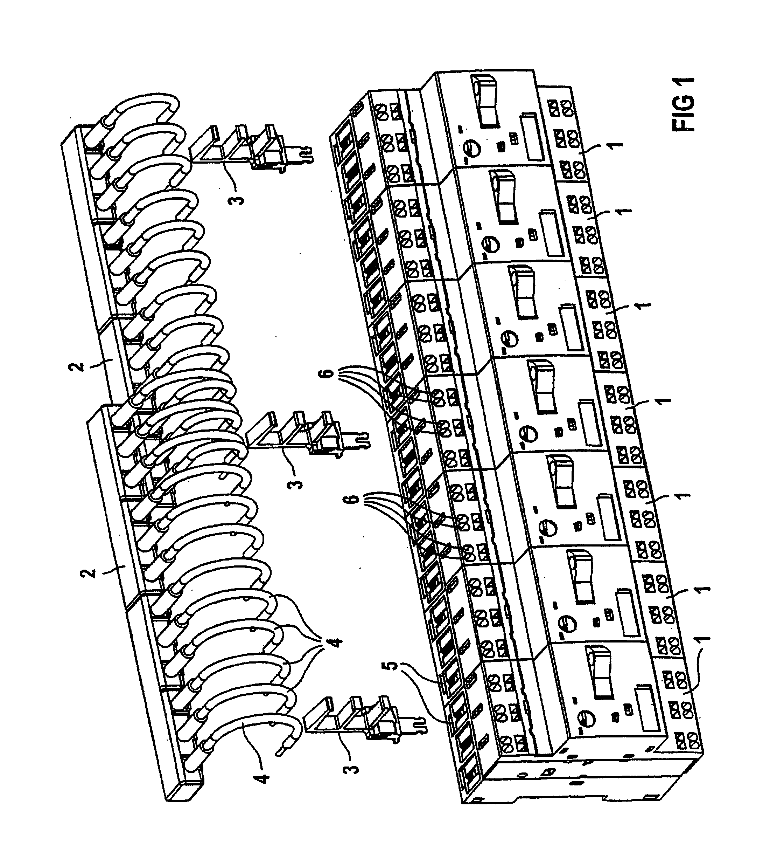

In FIG 1 sind eine Schaltgerätegruppe aus mehreren nebeneinander angeordneten Schaltgeräten 1 gleicher Bauart und Baugröße und zugehörige nicht angeschlossene Sammelschienensysteme 2 sowie die zu ihrer Halterung vorgesehenen Halteklammern 3 dargestellt. Die Sammelschienensysteme 2 sind mit flexiblen Leitungen 4 als Anschlußkontakte versehen. Zum Anschluß der Schaltgeräte 1 werden zunächst die Halteklammern 3 in Öffnungen 5 der Schaltgeräte eingeschnappt, dann die Sammelschienensysteme in die Halteklammern 3 eingeklemmt und schließlich die flexiblen Leitungen 4 über die Anschlußöffnungen 6 der Schaltgeräte 1 mit den Anschlüssen verbunden. Dabei können die Anschlüsse als Schraubanschlüsse oder in Cage-Clamp-Anschlußtechnik ausgeführt sein. Die flexiblen Leitungen 4 ermöglichen, daß abweichend von FIG 1 auch Schaltgeräte unterschiedlicher Baugröße und Bauart sowie mit unterschiedlichem Geräteabstand angeschlossenen werden können.

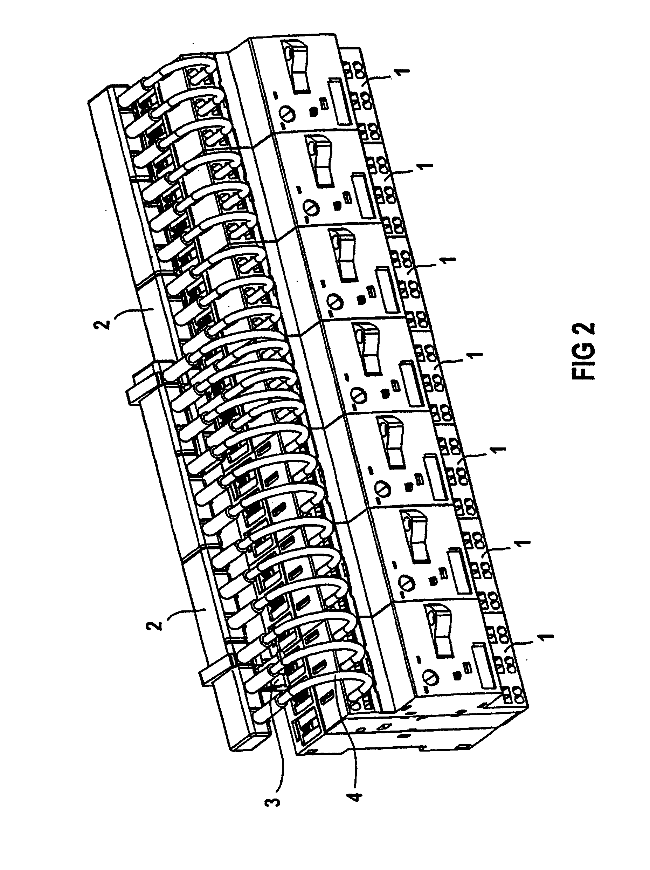

FIG 2 zeigt die Schaltgerätegruppe gemäß FIG 1 im angeschlossenen Zustand.

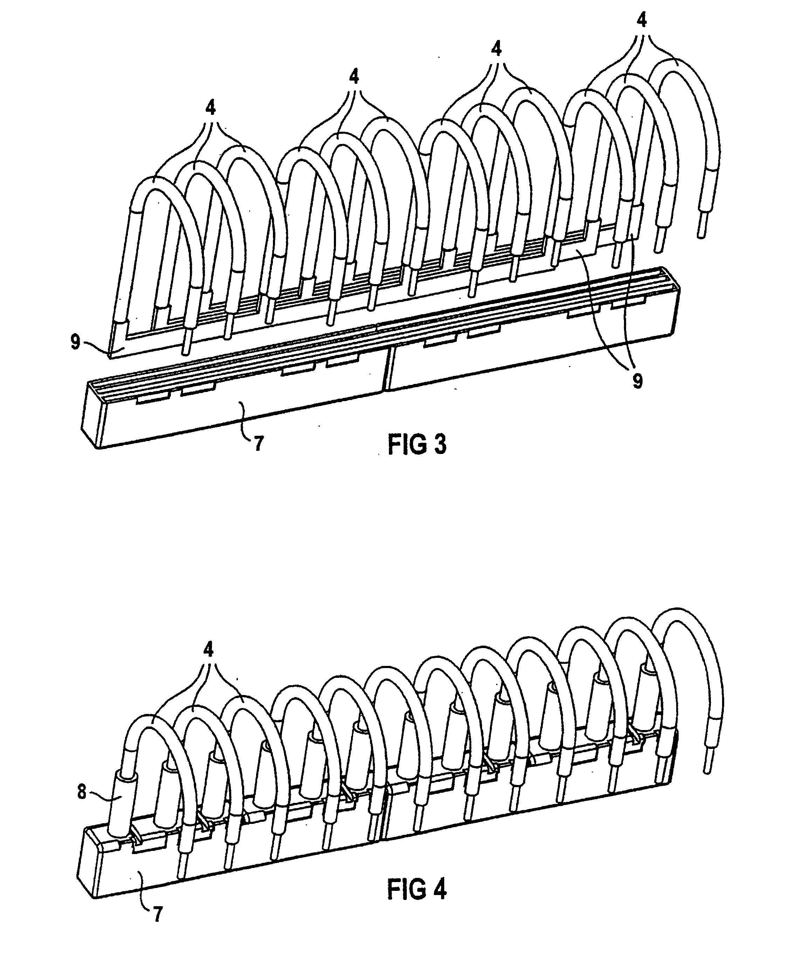

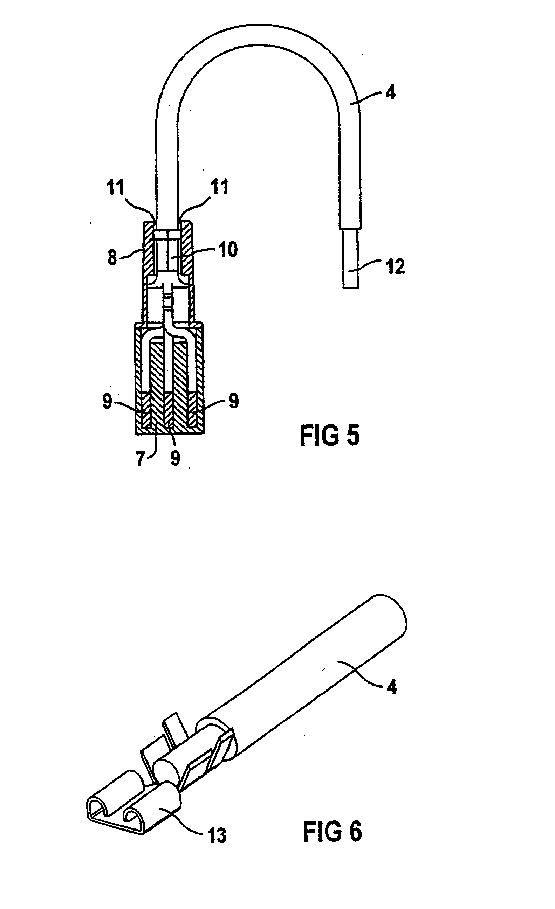

Das Sammelschienensystem 2 gemäß FIG 3 weist ein Isoliergekapseltes Gehäuse auf, das aus einem Unterteil 7 und einem Deckel 8 (siehe FIG 4, 5) zusammengesetzt ist. In das Unterteil 7 sind die drei Stromschienen 9 gleicher Ausführung gegeneinander verschoben eingesetzt. Die Stromschienen 9 sind in gleichen Abständen mit den flexiblen Leitungen 4 versehen, so daß sich über die Längsrichtung des Sammelschienensystems 2 flexible Leitungen 4 unterschiedlicher Phasen, d.h. Stromschienen 9 abwechseln. In FIG 4 ist das Sammelschienensystem 2 als komplett montiertes Bauteil dargestellt.

FIG 5 zeigt im Querschnitt das Sammelschienensystem 2, mit den im Unterteil parallelgeführten Stromschienen 9 die ein 3-Phasensystem bilden. Auf das Unterteil 7 ist der Deckel 8 mittels Ultraschall aufgeschweißt. Die hier als Flachsteckverbindung 10 ausgeführte Kontaktstelle (siehe FIG 6) wird durch Stege im Deckel 8 längs und quer umgriffen, so daß sich die Kontaktstelle weder verbiegen noch verdrehen kann. Die Leitungsdurchführung am oberen Rand des Deckels 8 ist als elastische Dichtlippe 11 ausgeformt. Der Kragen der Dichtlippe 11 ist derart ausgeformt, daß ein Leiter mit dem Leiterquerschnitt 2,5 mm² gerade umschlossen wird, und sich der Kragen bei größeren Leiterquerschnitten bis zu 6 mm² im elastischen Bereich verformt. Die Leitungsenden 12 der flexiblen Leitungen 4 sind mittels Ultraschall preßgeschweißt. Damit wird ein Aufspleißen der einzelnen Leitungsadern verhindert und somit das Einführen in Cage-Clamp-Anschlüsse erleichtert. Das Leitungsende 12 der mehradrigen Leitung 4 ist aufgrund der Verschweißung derart massig ausgebildet, daß bei Schraubanschlußklemmen eine ausreichende Kontaktkraft mittels der Anschlußschraube aufgebracht werden kann.

In FIG 6 ist der Kabelschuh 13 für die Flachsteckverbindung 10 dargestellt, der die Aufnahme unterschiedlicher Leiterquerschnitte ermöglicht.

FIG 7 zeigt eine Halteklammer 3 mit einer Lasche 14, über die in oben beschriebener Weise eine Verrastung in der Öffnung 5 des Schaltgeräts vorgesehen ist. Die Halteklammer 3 besteht im wesentlichen aus drei Stegen 15. Die durch sie gebildeten Zwischenräume sind der der Sammelschienensysteme 2 angepaßt, so daß ein Sammelschienensystem 2 eingeklemmt werden kann. Die Stege 15 der Halteklammer 3 sind in dem Bereich, in dem das Gehäuse (7,8) des Sammelschienensystems 2 umgriffen wird, mit einem Radius bzw. mit einer Schräge 16 versehen, so daß beim Herausziehen des Sammelschienensystems 2 aus der Halteklammer 3 keine Selbsthemmung auftritt. Dennoch ist durch die Stege 15 ein Festsitz des Sammelschienengehäuses gewährleistet. Da die Stege 15 der Halteklammer 3 die Sammelschienengehäuse an der Leitungsausgangsseite nicht vollständig umschließen, ist ein seitliches Verschieben möglich. Hierdurch können unterschiedliche Gerätebreiten der Schaltgeräte 1 auf einfache Weise ausgeglichen werden.

## Patentansprüche

1. Schaltgerätegruppe aus mehreren, nebeneinander angeordneten Schaltgeräten (1), an die ein isoliergekapseltes, zur elektrischen Versorgung der Schaltgeräte (1) dienendes Sammelschienensystem (2) angeschlossen ist, das mehrere Stromschienen (9) mit jeweils über die Stromschienenlänge verteilten Anschlußkontakten (4) aufweist, die als flexible Leitungen (4) ausgeführt sind und die mit Anschlüssen der Schaltgeräte (1) elektrisch verbunden sind, wobei die Stromschienen (9) in einer geschlossenen isoliergekapseltem Gehäuse (7,8) angeordnet sind, **dadurch gekennzeichnet, daß** das Sammelschienensystem (2) in Halteklammern (3) eingeklemmt ist, die an einigen der Schaltgeräte (1) befestigt sind.

2. Schaltgerätegruppe nach Anspruch 1, **dadurch gekennzeichnet, daß** das isoliergekapselte Gehäuse aus einem Unterteil (7) und einem Deckel (8) zusammengesetzt ist, die mittels Ultraschall verschweißt sind.

3. Schaltgerätegruppe nach Anspruch 2, **dadurch gekennzeichnet, daß** das Sammelschienensystem (2) von den Halteklammern (3) teilweise formschlüssig umgriffen und dabei in Längsrichtung der Stromschienen (9) verschieblich gehalten ist.

4. Schaltgerätegruppe nach Anspruch 2 oder 3, **dadurch gekennzeichnet, daß** die Halteklammern (3) am Gehäuse der Schaltgeräte (1) einschnappbar sind.

5. Schaltgerätegruppe nach einem der vorangehenden Ansprüche, **dadurch gekennzeichnet, daß** die elektrische Verbindung zwischen der Stromschiene (9) und der flexiblen Leitung (4) als Flachsteckverbindung (10) ausgeführt ist.

6. Schaltgerätegruppe nach einem der vorangehenden Ansprüche, **dadurch gekennzeichnet, daß** das Gehäuse (8) des Sammelschienensystems (2) Leitungsdurchführungen für die flexiblen Leitungen (4) aufweist, die als elastische Dichtlippe (11) ausgeführt sind.

## Claims

1. Switching device group comprising a plurality of switching devices (1) arranged next to one another, to which an insulation-clad busbar system (2) for supplying electrical power to the switching devices (1) is connected, which has a plurality of busbars (9) with connecting contacts (4) distributed in each case along the length of the busbars, said connecting contacts (4) being designed as flexible lines (4) and being electrically connected to terminals of the switching devices (1), the busbars (9) being arranged in a closed insulation-clad housing (7, 8), **characterised in that** the busbar system (2) is clamped in retaining clips (3) which are mounted on some of the switching devices (1).

2. Switching device group according to Claim 1, **characterised in that** the insulation-clad housing is composed of a lower part (7) and a cover (8), which are welded by means of ultrasound.

3. Switching device group according to Claim 2, **characterised in that** the busbar system (2) is encompassed by the retaining clips (3) partially with a keyed connection, being held so as to be movable in the longitudinal direction of the busbars (9).

4. Switching device group according to Claim 2 or 3, **characterised in that** the retaining clips (3) can be snapped on to the housing of the switching devices (1).

5. Switching device group according to one of the preceding claims, **characterised in that** the electrical connection between the busbar (9) and the flexible line (4) is designed as a tab connector (10).

6. Switching device group according to one of the preceding claims, **characterised in that** the housing (8) of the busbar system (2) has cable glands for the flexible lines (4) which are designed as an elastic sealing lip (11).

## Revendications

1. Groupe d'appareils de commutation composé de plusieurs appareils de commutation (1) qui sont disposés les uns à côté des autres et auxquels est raccordé un système de barres collectrices (2) qui a un blindage isolant, qui sert à l'alimentation électrique des appareils de commutation (1) et qui comporte plusieurs barres conductrices (9) ayant respectivement des contacts de connexion (4) qui sont répartis sur toute la longueur de la barre conductrice, qui sont réalisés sous la forme de conducteurs flexibles (4) et qui sont reliés électriquement avec des bornes des appareils de commutation (1), les barres conductrices (9) étant disposées dans un boîtier (7, 8) fermé avec blindage isolant, **caractérisé par le fait que** le système de barres collectrices (2) est coincé dans des étriers de retenue (3) qui sont fixés à quelques-uns des appareils de commutation (1).

2. Groupe d'appareils de commutation selon la revendication 1, **caractérisé par le fait que** le boîtier à blindage isolant est composé d'une partie inférieure (7) et d'un couvercle (8) qui sont soudés par ultrasons.

3. Groupe d'appareils de commutation selon la revendication 2, **caractérisé par le fait que** le système de barres collectrices (2) est enserré par les étriers de retenue (3) avec une concordance de formes partielle et est maintenu coulissant dans le sens de la longueur des barres conductrices (9).

4. Groupe d'appareils de commutation selon la revendication 2 ou 3, **caractérisé par le fait que** les étriers de retenue (3) peuvent être enclenchés sur le boîtier des appareils de commutation (1).

5. Groupe d'appareils de commutation selon l'une des revendications précédentes, **caractérisé par le fait que** la liaison électrique entre la barre conductrice (9) et le conducteur flexible (4) est réalisée comme une connexion à clip (10).

6. Groupe d'appareils de commutation selon l'une des revendications précédentes, **caractérisé par le fait que** le boîtier (8) du système de barres collectrices (2) comporte des traversées de conducteurs qui sont destinées aux conducteurs flexibles (4) et qui sont réalisées sous forme de lèvres d'étanchéité élastiques (11).
